# FASCICULE DE BREVET EUROPEEN

(11) **EP 1 955 622 B1**
(45) Date de publication et mention de la délivrance du brevet: **07.09.2011**
(21) Numéro de dépôt: 08356023.5
(22) Date de dépôt: 07.02.2008
(51) Int. Cl.: A47J 27/04

(54) **Dispositif d'alimentation en eau d'une cavité chauffante pour un appareil électromenager**
Wasserzuführungsvorrichtung in einem sich erhitzenden Hohlraum eines Haushaltsgeräts
Device for supplying water to the heating cavity of a household appliance

(30) Priorité: 08.02.2007 FR 0700894
(43) Date de publication de la demande: 13.08.2008
(73) Titulaire: Seb S.A., 69130 Ecully (FR)
(72) Inventeur: Allemand, Bernard, 39700 Dampierre (FR)
(74) Mandataire: Kiehl, Hubert

(56) Documents cités:
- EP-A- 0 374 863
- EP-A2- 0 277 337

## Description

L'invention se rapporte au domaine des appareils électroménagers de cuisson à la vapeur, et notamment au domaine des fours. Elle vise plus particulièrement un dispositif d'alimentation en eau de l'enceinte de cuisson à partir d'un réservoir, comme connu par le document EP 0 374 863.

Il est connu, dans le domaine des fours électroménagers, des dispositifs de génération de vapeur par l'intermédiaire d'un pot d'évaporation disposé au niveau de la sole du four. Le document EP 0277337 montre un four équipé d'un tel dispositif, le four comportant par ailleurs un réservoir d'eau permettant l'alimentation du pot à l'aide d'une électrovanne et d'un clapet anti-retour. Par ailleurs, le pot d'évaporation dispose d'un élément chauffant propre. Globalement, le dispositif est complexe et surtout relativement onéreux, nécessitant une carte électronique de commande.

Le document FR 2814734 montre un réservoir d'eau amovible pour four à vapeur comportant un clapet monté sur ressort et permettant d'assurer l'étanchéité du réservoir lors de son extraction du four pour le remplissage en eau, une partie en correspondance sur le four permettant d'ouvrir le clapet contre la force de rappel du ressort. Une telle solution reste simple, mais la présence du ressort, immergé, peut entraîner des dysfonctionnements, notamment par la formation de tartre au niveau des spires du ressort. Par ailleurs, dans un tel dispositif, l'air circulant également par le clapet, est source de coincement des bulles d'air, entraînant des dysfonctionnements.

La présente invention vise à pallier les inconvénients cités précédemment et à proposer un dispositif économique, simple de réalisation et d'emploi, en évitant l'utilisation d'électronique de commande.

La présente invention est atteinte à l'aide d'un dispositif d'alimentation en eau d'une cavité chauffante ou chauffée d'un appareil électroménager, ledit dispositif comportant un réservoir d'eau étanche à l'air dans sa partie supérieure, disposé amovible dans un support, le réservoir présentant une ouverture de remplissage d'eau en partie supérieure, ainsi qu'une ouverture en partie inférieure de passage de l'eau vers le support, ce dernier présentant, en partie inférieure, une ouverture d'écoulement d'eau vers la cavité chauffante, caractérisé en ce que :
- l'ouverture d'écoulement d'eau du support vers la cavité chauffante est disposée sensiblement au même niveau que la cavité chauffante,
- une pièce d'obturation est en liaison avec le réservoir et comporte des barres d'actionnement susceptibles d'être en relation avec au moins une rampe solidaire du support,
cette rampe agissant ou permettant d'agir sur au moins l'une des barres d'actionnement pour déplacer la pièce d'obturation en position d'ouverture ou de fermeture du passage de l'eau du réservoir vers le support par l'ouverture lorsque le réservoir est déplacé dans le support.

La présente invention se propose donc de réaliser un dispositif d'alimentation en eau d'une cavité de cuisson basé uniquement sur des déplacements mécaniques de pièces, en nombre réduit et simples de réalisation, en réduisant les sources de dysfonctionnement, afin de réaliser une alternative économique aux systèmes actuels.

Selon l'un des modes préféré de mise en oeuvre de l'invention, l'ouverture inférieure de passage d'eau du réservoir vers le support est délimitée par un guide vertical comportant au moins un orifice de passage d'eau, la pièce d'obturation étant un piston creux, pouvant coulisser dans le guide sous l'effet de la coopération entre les barres d'actionnement de la pièce d'obturation et les rampes du support, et, la pièce d'obturation comporte une ouverture de passage d'eau en partie basse.

La pièce d'obturation coulissant dans un guide pour permettre la liaison fluidique entre le réservoir et le support est similaire au fonctionnement d'une valve-tiroir, le contrôle étant entièrement mécanique. Une telle disposition est de conception simple.

Une telle conception permet notamment de pouvoir disposer les barres d'actionnement ainsi que l'ouverture de passage d'eau sous le réservoir, lesdites barres étant une extension de la pièce d'obturation, ce qui permet de garder un dispositif compact. L'ouverture de passage d'eau ainsi que les barres d'actionnement sont alors avantageusement disposées dans une zone inférieure du support fermée par le réservoir et sensiblement à la même pression que la cavité chauffante, ladite zone comportant l'ouverture d'écoulement d'eau du support vers la cavité chauffante.

Une telle disposition permet de proposer un système auto-régulant à niveau constant utilisant la gravité pour le transfert de l'eau. En effet, à l'instar des systèmes d'abreuvoirs à oiseaux, le niveau d'eau se stabilise lorsque l'air ne peut plus communiquer de la zone inférieure du support vers l'intérieur du réservoir afin de remplacer l'eau qui arrive dans ladite cavité.

Selon un mode de réalisation avantageux de l'invention, le réservoir comporte une poignée et est amovible du support par coulissement sensiblement horizontal, facilitant les opérations de remplissage et de nettoyage.

Selon une première mise en oeuvre de l'invention, le support comprend au moins une rampe agissant ou permettant d'agir sur au moins l'une des barres d'actionnement pour déplacer, lors de l'extraction du réservoir hors du support, la pièce d'obturation dans une position d'obturation de l'ouverture permettant le passage de l'eau vers le support.

Un tel dispositif est ainsi analogue au dispositif d'ouverture du passage d'eau, ce qui simplifie la conception du montage.

Selon cette configuration, la pièce d'obturation comporte au moins un trou sur une partie de sa périphérie, sensiblement à mi-hauteur, ledit trou étant susceptible, soit de communiquer avec l'orifice de passage d'eau du guide, soit d'être isolé dudit orifice, selon la position la pièce d'obturation.

Avantageusement, afin d'assurer l'étanchéité à l'air et à l'eau de la pièce d'obturation lors du coulissement dans le guide du réservoir, le guide de la pièce d'obturation est tubulaire, la pièce d'obturation étant cylindrique et comportant au moins trois joints périphériques d'étanchéité prenant appui sur l'intérieur du guide tubulaire, deux de ces joints étant disposés de part et d'autre du trou ménagé sur une partie de la périphérie de la pièce d'obturation, le troisième étant disposé en partie basse de la pièce d'obturation. Cette configuration n'autorise l'entrée d'air exclusivement que par l'intérieur de la pièce d'obturation lorsque celle-ci est hors de la position d'obturation.

Avantageusement, le réservoir dispose d'un couvercle comportant un guide de la partie supérieure de la pièce d'obturation, afin de limiter les risques de coincement de la pièce d'obturation.

Selon une seconde mise en oeuvre de l'invention, la pièce d'obturation est liée à une tige verticale autour de laquelle est agencé un ressort de rappel, ledit ressort étant monté en compression entre l'extrémité de la tige et la pièce d'obturation.

Cette seconde configuration utilise un ressort de rappel qui est contraint lors du déplacement de la pièce d'obturation en position d'ouverture du passage d'eau, où le réservoir est positionné dans le support, permettant à ladite pièce de reprendre sa position lorsque le réservoir est coulissé hors du support pour le remplissage d'eau.

Comme pour la première configuration, un guide vertical, tel que précédemment mentionné, est avantageusement utilisé, afin de maintenir le ressort sensiblement vertical.

Selon l'un des aspects des différentes configurations évoquées, les rampes du support sont disposées sur au moins l'une des parois de coulissement dudit support, avantageusement les parois latérales, en étant inclinées d'un angle α par rapport à la direction de coulissement du réservoir.

Cette configuration permet, par le mouvement de coulissement du réservoir par rapport au support, de réaliser un mouvement de translation ou de rotation de la pièce d'obturation afin que cette dernière présente les deux positions d'ouverture et d'obturation précédemment mentionnées.

Avantageusement, les deux parois latérales du support portent chacune au moins une rampe avec laquelle coopèrent les barres d'actionnement de la pièce d'obturation, assurant ainsi un déplacement plus sûr de ladite pièce.

Selon ces configurations, l'ouverture de remplissage d'eau du réservoir est avantageusement fermée par un bouchon amovible, ledit bouchon réalisant une étanchéité à l'air avec l'intérieur du réservoir lorsque mis en place. Une telle disposition permet de renforcer l'étanchéité du réservoir, où seule la pièce d'obturation permet de réaliser une liaison fluidique avec le support, lorsque le couvercle et le bouchon amovible de l'ouverture de remplissage d'eau sont mis en place.

La présente invention vise également un appareil électroménager comportant un dispositif d'alimentation en eau d'une cavité chauffante selon l'une des caractéristiques précédemment mentionnées, et plus particulièrement un four électroménager où la cavité chauffante représente la sole dudit four.

Avantageusement, le support du réservoir est disposé hors de l'enceinte du four, dans une zone froide, afin d'éviter tout risque de déformation et de dysfonctionnement lié à l'échauffement.

Selon une mise en oeuvre préférée de l'invention dans ce type d'appareil, le support de réservoir est ouvert au niveau de la face avant du four, le réservoir coulissant alors horizontalement, de l'arrière vers l'avant du four.

La manière de réaliser l'invention ainsi que les avantages qui en découlent, ressortiront bien de la description du mode de réalisation qui suit, donné à titre indicatif et non limitatif, à l'appui des figures annexées dans lesquelles :
La figure 1 est une vue en perspective d'un four équipé de la présente invention.
La figure 2 est une vue en perspective du dispositif d'alimentation en eau selon l'invention.
La figure 3 représente ce dispositif d'alimentation dans une vue éclatée.
La figure 4 est une coupe partielle d'une partie du dispositif.
La figure 5 est une vue de dessus en plongée de certains éléments du dispositif.
La figure 6 est une vue en perspective d'un détail du dispositif.
La figure 7 est une vue de dessus du dispositif où certains éléments ont été omis.
La figure 8 est une coupe longitudinale selon A-A de la figure 7.
La figure 9 est une coupe partielle de certains éléments du dispositif suivant les axes longitudinal et transversal des pièces principales.
La figure 10 est également une coupe partielle du dispositif similaire à la figure 9, où d'autres éléments ont été représentés,
La figure 11 montre un détail d'une coupe transversale de certains éléments du dispositif.
Les figures 12, 13 et 14 sont des vues analogues aux vues respectives des figures 9, 10 et 11, où certains éléments sont dans une position différente de fonctionnement.
Les figures 15a et 16a sont des vues respectivement en perspective et en coupe longitudinale d'un détail du dispositif dans une position de fonctionnement.
Les figures 15b et 16b sont des vues en perspective et en coupe d'un détail du dispositif, analogues aux figures 15a et 16a, dans une autre position de fonctionnement.
La figure 17 est une vue de dessus du dispositif selon l'invention.
La figure 18 est une vue en coupe transversale selon B-B de la figure 17.
La figure 19 est une vue éclatée d'un détail d'une variante de réalisation.
Les figures 20a et 20b représentent un détail d'une variante de réalisation selon deux positions.
La figure 21 est une coupe partielle d'une partie du dispositif selon la variante de réalisation.
La figure 22 est une vue en coupe longitudinale selon C-C de la figure 17 d'une partie de la variante de réalisation.

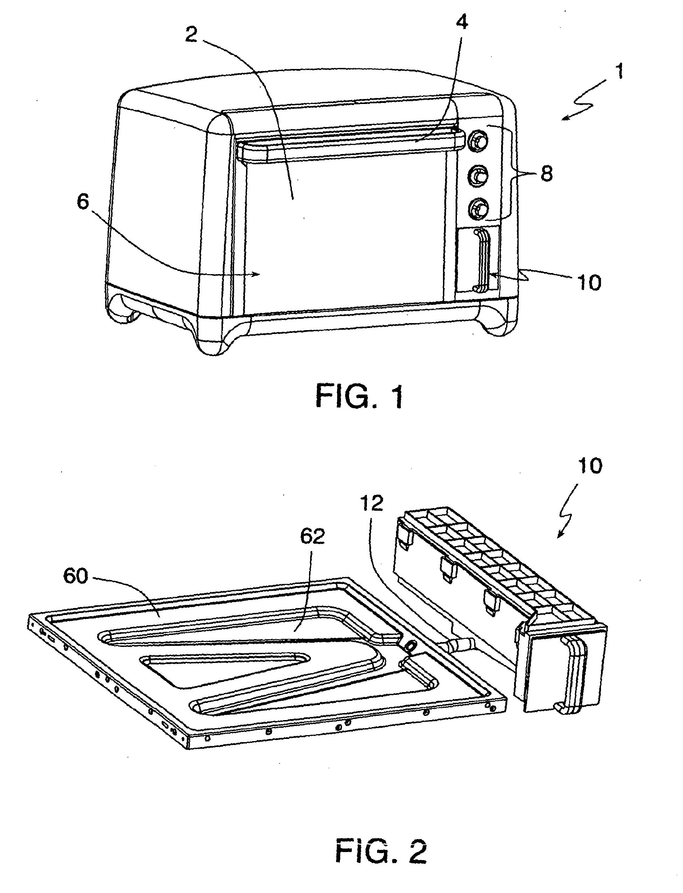

Comme précédemment mentionné, la présente invention est relative à un dispositif d'alimentation en eau d'une cavité chauffante. L'illustration qui va suivre de cette invention concerne un four électroménager 1 tel que présenté à la figure 1.

Un tel four comporte une porte 2 actionnée par une poignée 4 permettant l'accès à une enceinte de cuisson 6. Différents boutons de commande 8 permettent notamment un réglage de la température et du temps de cuisson. D'autres fonctions peuvent être associées à ces organes de commandes, telle par exemple la sélection d'un mode de fonctionnement particulier du four.

Selon l'invention, le four comporte un dispositif 10 d'alimentation en eau d'une cavité chauffante, permettant la création de vapeur dans l'enceinte de cuisson 6. Un tel dispositif est présenté figure 2. Selon l'exemple de réalisation, la cavité chauffante 60 est la sole du four et comporte une zone en dépression 62, présentant une grande surface et une faible profondeur, permettant la réception et la vaporisation de l'eau provenant du dispositif d'alimentation 10. Par ailleurs, la sole, avantageusement métallique et protégée contre la corrosion, comporte un élément chauffant sous-jacent.

Le dispositif d'alimentation en eau de la cavité chauffante 60 est relié à ladite cavité par un conduit 12.

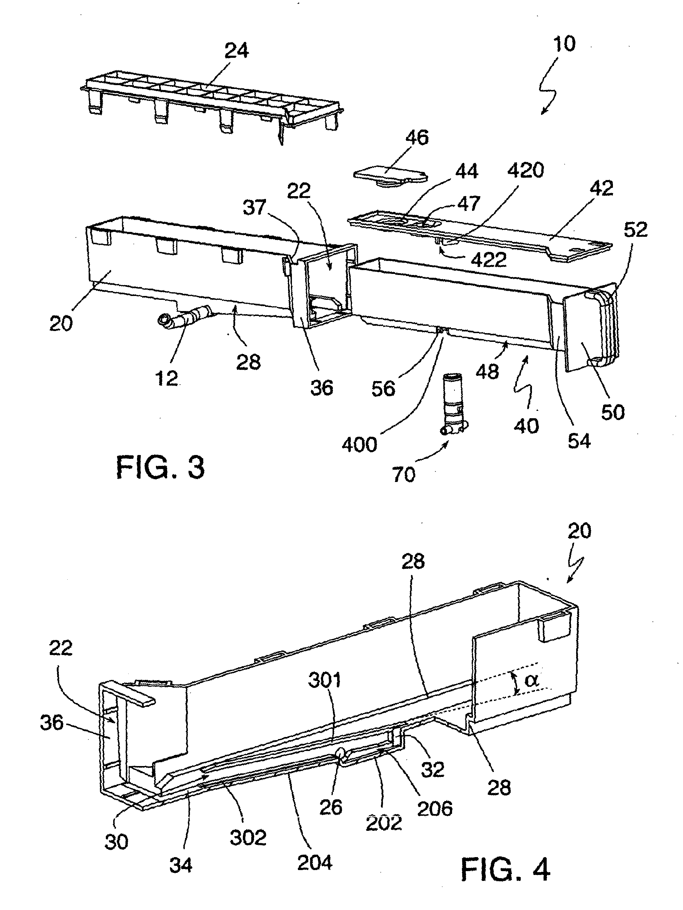

La figure 3 montre une vue éclatée du dispositif qui comprend un support 20 de forme parallélépipédique, ouvert en partie avant 22 et dont la partie supérieure est fermée par une pièce plate 24 venant, par clipage, se fixer sur ledit support. La partie avant 22, bordée par un cadre 36, est plus large que la partie arrière, en présentant une échancrure 37.

En partie inférieure du support est ménagée une ouverture 26 en liaison avec le conduit 12.

La configuration interne du support 20 comprend des rebords latéraux 28, ces rebords étant sensiblement horizontaux, ainsi que deux glissières 30 disposées en vis-à-vis sur les parois latérales du support, sous les rebords 28, sur une longueur significative dudit support, soit environ sur au moins la moitié de la longueur dudit support. Ces glissières sont composées d'une rampe supérieure 301 et d'une rampe inférieure 302, la rainure ainsi ménagée entre les deux rampes étant en liaison, en partie arrière, avec une butée réalisée par un décrochement vertical 32 de la face inférieure du support. Cette face inférieure comprend, à l'avant, une partie plane 34, prolongée vers l'arrière par une paroi 204 inclinée vers le bas, jusqu'à un décrochement ménageant, par la paroi 202 sensiblement horizontale, une zone inférieure 206 formant cuvette. Dans cette zone se situe l'ouverture 26.

Telle qu'elle est bien visible figure 2, la glissière est inclinée par rapport à l'horizontale d'un angle α voisin de 4°, la partie basse de la glissière étant située vers l'arrière du support, dans la zone 206. Par ailleurs, la rampe inférieure 302 débouche, en partie avant, sur la partie plane 34 formant un cadre.

Au niveau de l'ouverture 26, la rampe inférieure 302 présente un décrochement qui suit la courbure de l'ouverture 26, ce décrochement étant nécessaire pour le démoulage de la pièce lors de sa réalisation en plastique. Toutefois, la rampe correspondante située sur la paroi latérale opposée du support ne présente pas un tel décrochement.

Le dispositif comporte également un réservoir d'eau 40 assemblé étanche à l'air, destiné à être disposé en coulissement dans le support 20. Sa forme est donc sensiblement parallélépipédique, adaptée à la forme intérieure du support 20. Le réservoir 40 comporte ainsi un décrochement 48 venant se positionner sur les rebords internes 28 du support pour le coulissement dudit réservoir.

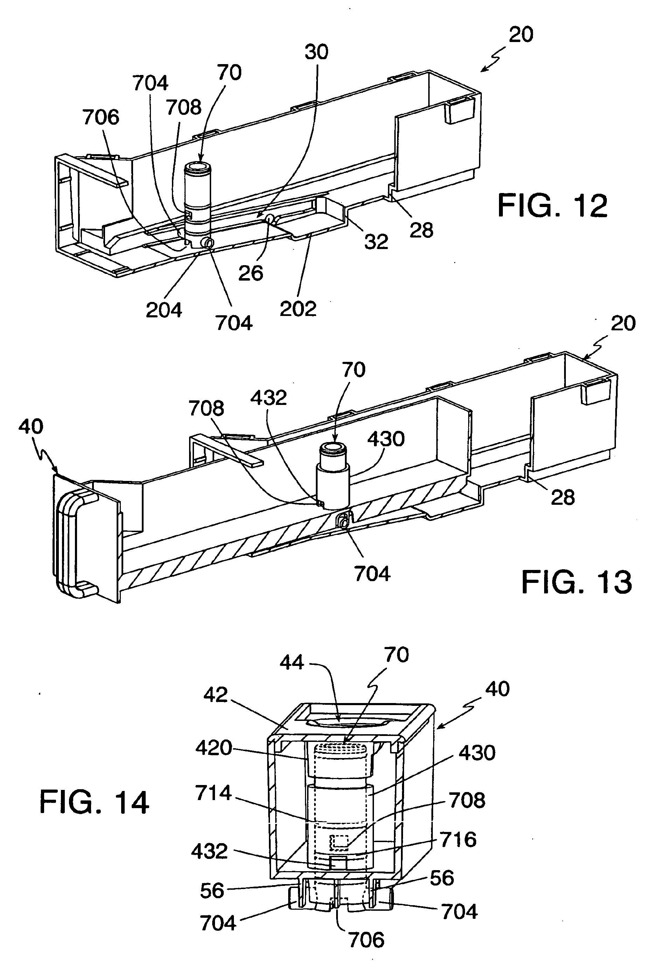

La partie supérieure du réservoir est fermée par un couvercle soudé 42, tel que visible figure 14, comportant un orifice de remplissage 44 fermé, de manière étanche à l'air par une bonde 46. Un renfoncement 47 du couvercle 42 permet facilement de glisser les doigts pour se saisir de la bonde.

En variante, afin de faciliter le nettoyage du réservoir, il peut être prévu un couvercle amovible assemblé sur le réservoir à l'aide de vis ou de clips, en utilisant un joint sur toute la périphérie du couvercle pour assurer l'étanchéité nécessaire. L'orifice de remplissage n'est alors plus indispensable.

Le couvercle 42 comporte également un guide tubulaire 420 vertical orienté vers l'intérieur du réservoir, dont la fonction sera expliquée ultérieurement. Ce guide comporte deux échancrures 422 en son extrémité, diamétralement opposées.

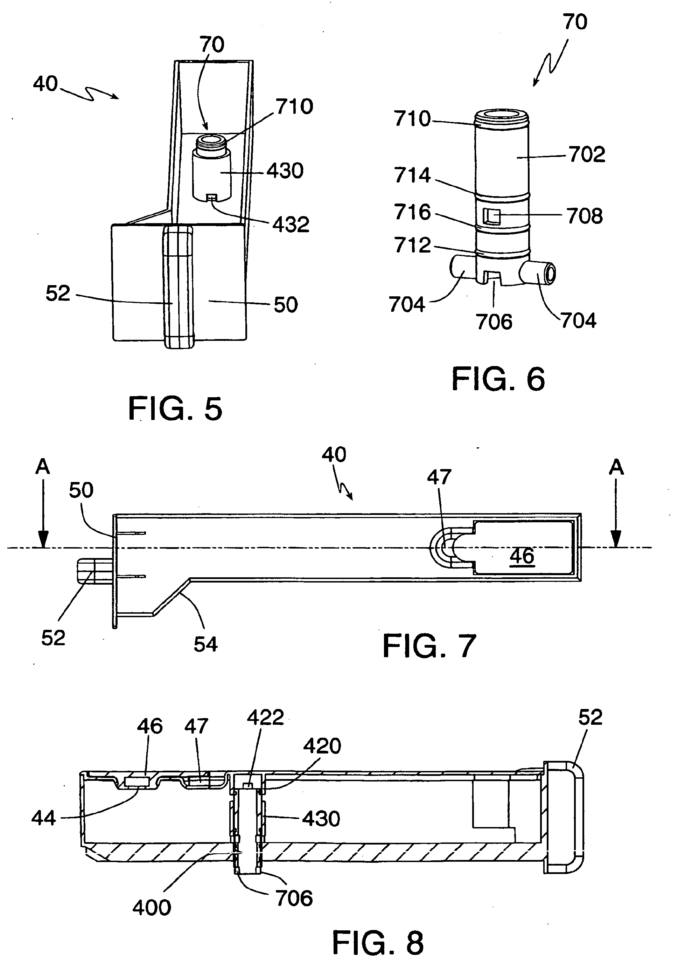

Par ailleurs, le réservoir 40 comporte une ouverture 400 sur sa paroi inférieure, cette ouverture étant délimitée, à l'intérieur du réservoir, par un guide 430, similaire dans sa forme au guide 420, tel que le montre la figure 5. Ce guide comporte également deux échancrures 432 ménagées à sa base et permettant une liaison avec l'intérieur dudit guide, et donc avec l'ouverture 400, lesdites échancrures étant orientées vers l'avant et vers l'arrière du réservoir.

La face avant 50 du réservoir 40 comprend une poignée de préhension 52, ladite face pouvant venir en appui contre le cadre 34 du support 20. De même que pour le support 20, la partie avant du réservoir 40 comporte une échancrure 54, susceptible de coopérer avec l'échancrure 37 du support.

Selon l'invention, le dispositif comporte un piston 70, inséré par la face inférieure du réservoir 40 dans l'ouverture 400 et le guide 430. Ce piston est présenté plus en détail à la figure 6.

Il est ainsi composé d'un cylindre 702 creux, ouvert en ses deux extrémités, et pouvant donc coulisser dans le guide 430. Au niveau de la base du cylindre, sont agencées des barres d'actionnement sous la forme de deux coulisseaux 704 radiaux disposés à l'opposé l'un de l'autre. Ces coulisseaux 704 sont de forme tubulaire et sont susceptibles de coopérer avec les glissières 30 du support 20. Ils sont donc perpendiculaires aux faces latérales du réservoir lorsque le piston est inséré dans ledit réservoir.

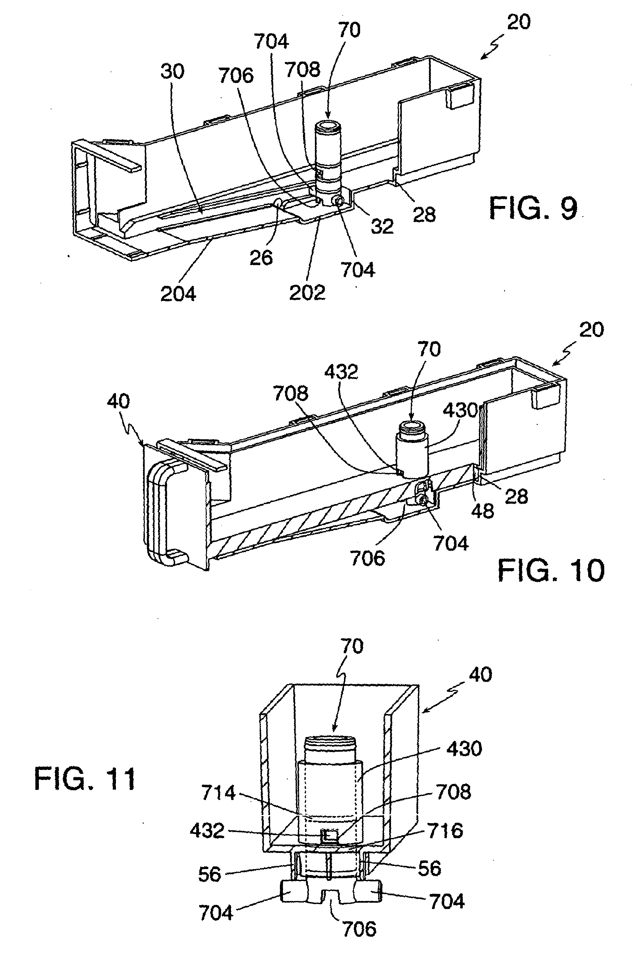

De plus, tel que le montre notamment la figure 10, les coulisseaux sont disposés sous la partie inférieure du réservoir 40, deux arches 56 ménagées à ce niveau, sous le réservoir, permettant le guidage desdits coulisseaux.

Par ailleurs, deux échancrures 706 sont réalisées sur le cylindre du piston au niveau des coulisseaux, à l'extrémité du cylindre, c'est-à-dire sous le réservoir 40, ces fenêtres étant diamétralement opposées et orientées vers l'avant et l'arrière du réservoir lorsque le piston est inséré dans ledit réservoir.

Deux autres ouvertures 708 sont réalisées sensiblement à mi-hauteur du cylindre, ces ouvertures étant également diamétralement opposées et situées à la verticale des échancrures 706. Ces ouvertures sont ainsi décalées d'un angle voisin de 90° par rapport aux coulisseaux 704 et sont susceptibles de venir en coïncidence des échancrures 432 du guide 430.

Différents joints toriques d'étanchéité sont disposés autour du cylindre du piston : un joint supérieur 710 situé à l'extrémité du cylindre 702, un joint inférieur 712, un joint 714 disposé juste au dessus des ouvertures 708, et un joint 716 disposé juste au dessous des ouvertures 708.

Ces différents joints, outre les fonctions d'étanchéité qui seront expliquées ultérieurement, permettent un guidage du piston lors de son déplacement vertical dans les guides 430 et 420, tel que le montre notamment la figure 8, qui est une coupe selon A-A de la figure 7 représentant la vue de dessus du réservoir.

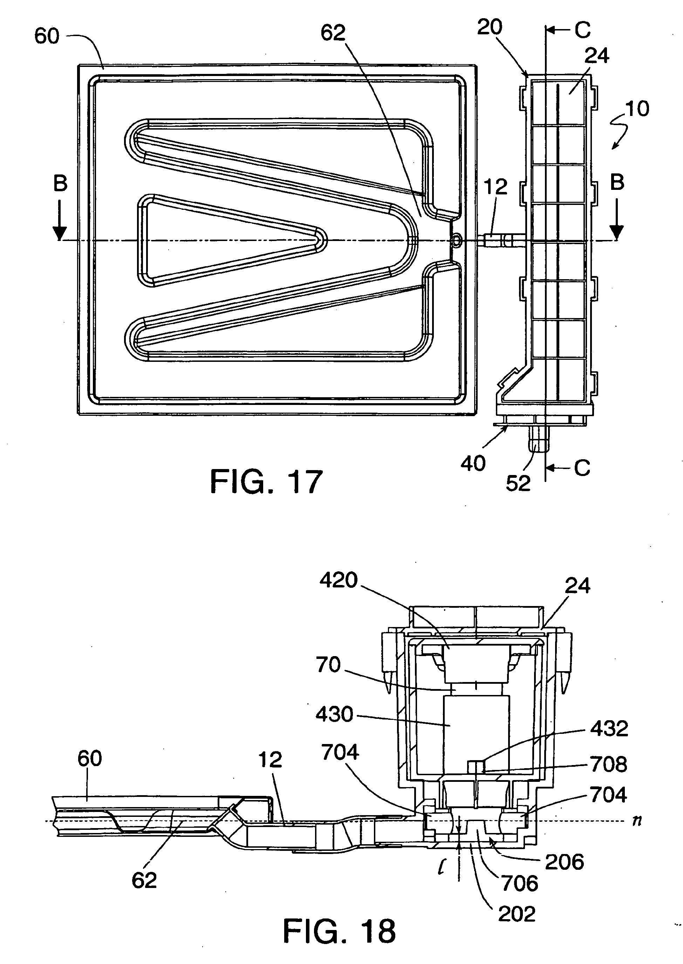

En fonctionnement, le réservoir 40 est disposé dans le support 20, les décrochements 48 du réservoir prenant appui sur les rebords internes 28 du support. Cette position est notamment illustrée aux figures 1, 2, 9 à 11, 15a, 16a, ainsi que sur les figures 17 et 18.

Tel qu'il est visible sur ces figures, dans cette position, le réservoir 40 est complètement disposé dans le support 20, la face avant 50 prenant appui sur le cadre 36 du support 20. Ainsi, seule dépasse la poignée 52 du réservoir 40 de la face avant du four, tel que le montre la figure 1.

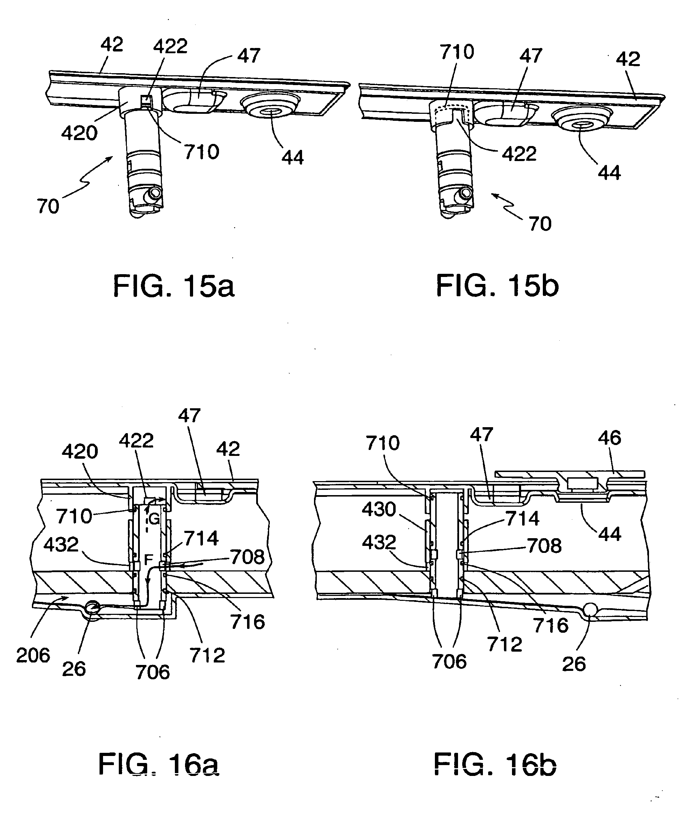

Dans cette position, les coulisseaux 704 du piston 70 sont disposés à l'extrémité arrière des glissières 30, contre le décrochement vertical 32 formant butée. Les glissières étant inclinées vers le bas, le piston 70 se trouve ainsi en position basse par rapport aux guides 420 et 430. Dans cette situation, les ouvertures 708 du piston sont situées en regard des échancrures 432, tel que le montre la figure 11. En partie haute du piston, le joint 710 est positionné à l'extrémité du guide, de telle sorte qu'une partie de l'échancrure 422 du guide 420 soit située au dessus de l'extrémité du cylindre 702, tel que le montre la figure 15a.

Etant donné que le réservoir ne réalise pas une étanchéité avec le support lorsqu'il est introduit dans ledit support, la zone inférieure 206 est par conséquent toujours à la pression atmosphérique, tout comme sensiblement la sole 60.

Ainsi, dans cette position, et tel que le montre la figure 16a, lorsque le réservoir 40 comporte de l'eau, cette dernière peut s'introduire dans la zone inférieure 206 formant cuvette du support en passant dans le piston 70 par les ouvertures 432 et 708 puis en sortant du piston par les échancrures 706. L'eau peut alors quitter le support 20 pour alimenter la sole 60 par l'ouverture 26 puis le conduit 12 afin d'équilibrer les niveaux entre la zone inférieure 206 et la sole 60. Un tel trajet est présenté figure 16a, par la flèche F,.

Dans le même temps, de l'air peut remonter de la zone inférieure à l'intérieur du piston et s'introduire dans le volume du réservoir, par les parties des échancrures 422 laissées libres par le joint 710, afin de remplacer l'eau s'écoulant vers la sole 60. Une telle entrée d'air est représentée par la flèche G sur la figure 16a.

Par ailleurs, le joint 714 évite une introduction d'eau par l'extrémité libre du guide 430.

Tel que le montre la figure 18, un espace *[* est ménagé entre l'extrémité inférieure du piston et la paroi 202 délimitant la zone inférieure 206, afin de faciliter l'écoulement d'eau.

Cette figure 18 montre également une légère déclivité dans le conduit 12, de sorte qu'un faible niveau d'eau dans le réservoir suffit à transférer cette eau dans la sole.

Lorsque le niveau d'eau dans la zone inférieure 206 est suffisamment haut pour boucher les passages par les échancrures 706, l'eau ne s'écoule plus car l'air ne peut plus compenser l'eau descendante.

Un tel niveau correspond sensiblement au niveau n indiqué figure 18. Ce niveau correspond sensiblement à un remplissage à mi-hauteur de la zone en dépression 62 de la sole 60.

Dès que la résistance fait évaporer l'eau, le niveau baisse, les passages par les échancrures 706 sont à nouveau ouverts, libérant ainsi le passage à l'air. L'eau évaporée est alors automatiquement compensée.

Le niveau *n*, correspondant à la hauteur des échancrures 706 détermine ainsi le niveau d'eau dans la zone inférieure 206 et donc dans la cavité chauffante. Ce niveau peut légèrement varier en fonction de la mouillabilité des matériaux utilisés pour le piston, le réservoir, et le support, ainsi qu'en fonction d'une éventuelle pression résiduelle dans l'enceinte de cuisson.

Une telle position du piston, correspondant donc au positionnement du réservoir 40 complètement dans le support 20, est appelée position d'ouverture, puisqu'elle permet, tel un robinet ouvert, de transférer l'eau du réservoir vers la sole du four.

Lorsque l'utilisateur désire remplir ou nettoyer le réservoir 40, il saisit ce dernier par la poignée 52 en face avant du four et fait coulisser le réservoir par rapport au support 20 dans un mouvement sensiblement horizontal et perpendiculaire à la face avant du four.

Ce mouvement de coulissement induit un guidage des coulisseaux 704 du piston dans les glissières 30, qui provoque un déplacement vertical vers le haut du piston 70 dans les guides 420, 430.

Les figures 12 à 14, 15b et 16b montrent le positionnement du piston lorsque les coulisseaux 704 sont à proximité de l'extrémité des glissières.

Dans cette position, les ouvertures 708 du piston ne sont plus en coïncidence avec les échancrures 432 du guide 430, et les joints 712 et 716 isolent les échancrures 432, de sorte qu'aucune entrée d'eau dans le corps du piston ne peut être effectuée par lesdites échancrures.

Par ailleurs, en partie supérieure du piston, tel que le montre la figure 15b, le joint 710 est désormais positionné au dessus des échancrures 422, de sorte qu'aucune entrée d'eau ne peut se faire par les échancrures 422.

De la sorte, l'intérieur du piston est complètement isolé du volume intérieur du réservoir. Une telle position peut donc être appelée position d'obturation.

Le réservoir peut donc ainsi être complètement sorti du support, ce qui provoque un léger déplacement vers le haut du piston, confortant les positions qui viennent d'être présentées.

L'angle d'inclinaison α des glissières d'environ 4° permet un mouvement vertical du piston de l'ordre de 1,5cm, ce qui permet les différents positionnements des joints tels que présentés.

Le remplissage ultérieur d'eau ne provoque ainsi aucune fuite par les échancrures 706 du piston.

Le replacement du réservoir 40 dans le support 20 permet de faire coulisser le piston vers le bas afin d'amener les ouvertures 708 du piston 70 en coïncidence avec les échancrures 432 du guide 430, permettant le passage d'eau dans le support puis dans la sole.

Outre les avantages qui viennent d'être évoqués, et notamment l'ajustement automatique du niveau d'eau par des moyens simples et uniquement mécaniques, le dispositif selon l'invention présente également l'avantage de pouvoir être facilement démonté. En particulier, le piston peut être sorti du guide 430 en cas de difficulté de coulissement pour un nettoyage approfondi.

La présente invention couvre également les équivalents techniques des différentes pièces et fonctions qui viennent d'être évoquées, ainsi que les différents agencement possibles du support et du réservoir dans l'appareil. Le support peut en effet être disposé sur l'une des parois latérales ou bien sur la paroi de fond, selon l'usage.

Par ailleurs, des versions plus simplifiées du dispositif peuvent être envisagées dans le cadre de l'invention, la pièce d'obturation qui, dans l'exemple d'illustration, est le piston 70 pouvant être réduit à un bouchon entièrement disposé dans le récipient et actionné en obturation ou hors de l'obturation du passage d'eau par les barres d'actionnement. Il sera alors privilégié un mouvement en rotation, permettant plus facilement de garantir une étanchéité au niveau du réservoir, un système de cames permettant par exemple la transformation du mouvement de translation lors de l'insertion ou du retrait du réservoir, en mouvement de rotation des barres d'actionnement.

Un dispositif de ressort et de clapet, tel celui décrit dans le document FR 2398433 peut également être utilisé avec efficacité, de tels éléments étant largement connus dans le domaine des connexions de réservoir de liquide.

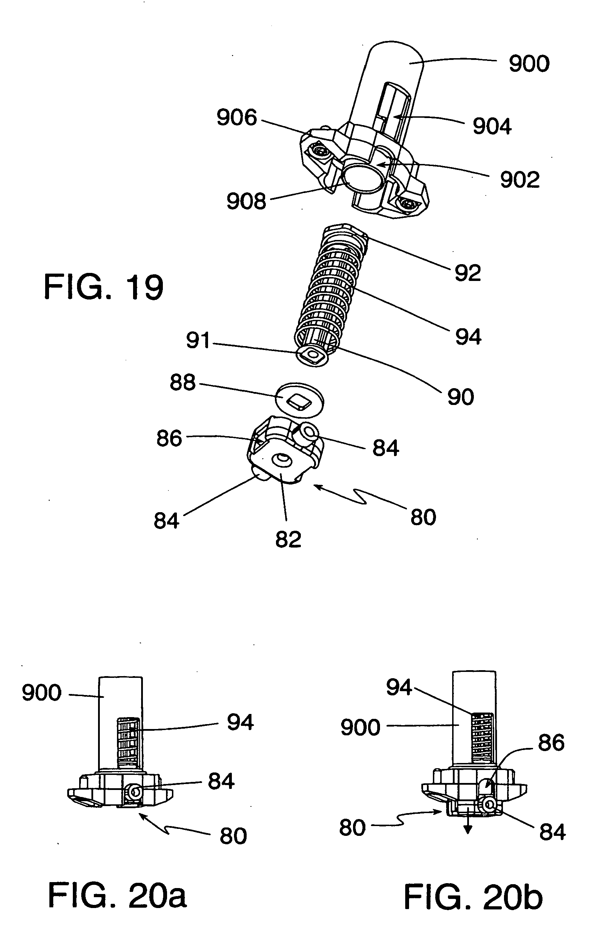

Une telle utilisation est décrite aux figures 19 à 22. Selon cette variante de réalisation, le piston 70 tel que précédemment expliqué est remplacé par une pièce 80 comportant un corps creux 82 pourvu de deux ouvertures 86, à l'instar des ouvertures 706 du piston 70, ainsi que deux barres d'actionnement 84.

La pièce 82 est en liaison avec une tige 90 par l'intermédiaire d'un joint d'étanchéité 88 en appui au fond de la pièce 80, la tige 90 étant montée dans un guide 900. Un ressort 94 est fixé autour de cette tige, légèrement en compression entre une pièce 92 issue de la tige 90 et venant en butée contre l'extrémité du guide 900, et une extension de la pièce 80.

La partie basse du guide 900 comporte des échancrures 902 en correspondance avec les barres d'actionnement 84. Deux lumières 904 sont ménagées dans le guide 900, permettant une liaison fluidique entre l'extérieur et l'intérieur du guide. Une embase 906 permet la fixation du guide 900 au réservoir. Cette embase comprend par ailleurs un conduit 908 dans le prolongement du guide 900, s'étendant en direction de la pièce 80.

Dans la mise en oeuvre de cette solution, le ressort 94 et la tige 90 sont situés dans le guide 900, la tige 90 débouchant à l'extérieur de l'embase 906, au niveau du conduit 908. La pièce 80 et le joint 88 sont en appui contre l'extrémité 91 de la tige 90 par l'intermédiaire d'une vis liant la pièce 80 à l'extrémité de la tige 90, les barres d'actionnement 84 étant partiellement situées dans les échancrures 902.

La figure 20a présente une telle configuration de repos, où le joint d'étanchéité 88, par la compression du ressort 94, est en appui contre l'extrémité du conduit 908, et empêche l'eau, pénétrant dans les ouvertures 904, de s'écouler plus en aval. Cette situation correspond à celle où le réservoir est coulissé de son support en vue d'un remplissage d'eau.

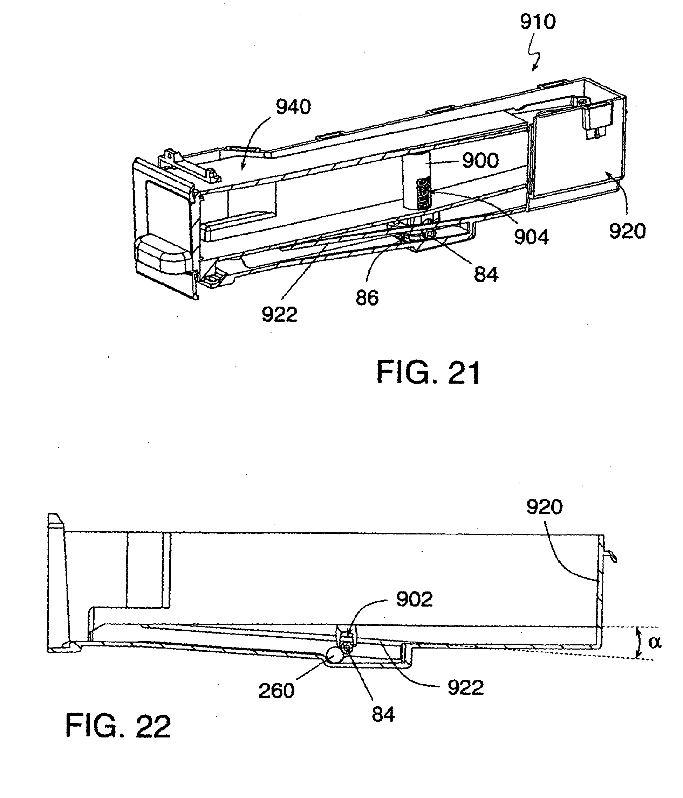

La figure 21, qui représente une coupe partielle du dispositif 910 d'alimentation en eau d'une cavité chauffante, non représentée, montre la situation où le réservoir est disposé dans son support.

Ainsi, le guide 900 est disposé dans un réservoir 940 pouvant coulisser dans un support 920, selon une configuration analogue à celle présentée aux figures 3, 10 et 13 notamment, la pièce 80 étant donc située sous le réservoir 940. Ce dernier est semblable au réservoir 40, en présentant notamment une ouverture de remplissage d'eau en partie supérieure, telle que précédemment décrite, cette ouverture étant obturée par un bouchon amovible.

Le support 920, présente une différence structurelle et fonctionnelle notable par rapport au support 20, en ne présentant qu'un seul jeu de rampes fonctionnelles 922 disposées latéralement, et sous lesquelles sont agencées les barres d'actionnement 84. Le support 920 comporte une ouverture 260 d'écoulement d'eau vers la cavité chauffante, visible figure 22, de manière identique à l'ouverture 26. Tel que bien visible sur la figure 22, les rampes 922 sont inclinées d'un angle α, tel que précédemment expliqué.

En fonctionnement, lorsque le réservoir 940, une fois rempli, est poussé vers le fond du support 920, le jeu de rampes 922 va solliciter les barres d'actionnement 84, amenant un déplacement vers le bas de l'ensemble formé de la pièce 80, du joint 88 et de la tige 90, contre la force de rappel du ressort 94, tel qu'indiqué aux figures 20a, 21 et 22, entraînant l'ouverture du passage de l'eau par l'extrémité du conduit 908. Dès lors, de l'eau située dans le réservoir 940 peut s'écouler par les lumières 904 et le conduit 908, au travers de la pièce 80 d'où elle ressort par les ouvertures 86. L'eau peut alors s'écouler par l'ouverture 260 prévue dans le support 920, vers la cavité chauffante.

Lorsque le réservoir 940 est coulissé vers l'avant pour le remplir en eau, le ressort de compression 94 ramène progressivement la pièce 80 et donc le joint 88 vers l'extrémité du conduit 908, par coopération entre les barres d'actionnement 84 et les rampes 922, jusqu'au contact entre le joint et l'extrémité dudit conduit, ce qui ferme l'ouverture de passage de l'eau.

Lorsque le réservoir est déplacé à son maximum par rapport au support, sans pouvoir être complètement sorti dudit support, le joint 88, disposé dans la pièce 80, se trouve au contact de l'extrémité 91 de la tige 90, les barres d'actionnement 84 étant alors proches des contours des échancrures 902, tel que le montre la figure 20b.

De la sorte, la compression du joint sur le conduit 908 interdit tout passage d'eau dans la pièce 80, ce qui donc coupe l'alimentation en eau de la cavité chauffante.

Il pourrait être également envisagé un fonctionnement par effet inverse du ressort, les barres d'actionnement 84 prenant appui sur des rampes, telles les rampes 922, le ressort agissant en détente pour maintenir les barres d'actionnement contre les rampes en position d'ouverture du passage de l'eau.

Ainsi, un seul jeu de rampes permet l'ouverture ou la fermeture de l'ouverture du passage de l'eau, le ressort réalisant l'opération complémentaire de fermeture ou d'ouverture lors du mouvement inverse du réservoir par rapport au support.

Bien que l'illustration de la présente invention concerne un four électroménager, d'autres appareils peuvent être équipés d'un tel dispositif, tels notamment les cuiseurs vapeur.

## Revendications

1. Dispositif (10, 910) d'alimentation en eau d'une cavité chauffante ou chauffée (60) d'un appareil électroménager, ledit dispositif (10, 910) comportant un réservoir d'eau (40, 940) étanche à l'air dans sa partie supérieure, disposé amovible dans un support (20, 920), le réservoir (40, 940) présentant une ouverture (44) de remplissage d'eau en partie supérieure, ainsi qu'une ouverture (400) en partie inférieure de passage de l'eau vers le support (20, 920), ce dernier présentant, en partie inférieure, une ouverture (26, 260) d'écoulement d'eau vers la cavité chauffante (60),
l'ouverture (26, 260) d'écoulement d'eau du support (20, 920) vers la cavité chauffante (60) est disposée sensiblement au même niveau que la cavité chauffante (60),
**caractérisé en ce que**:
- une pièce d'obturation (70, 80) est en liaison avec le réservoir (40, 940) et comporte des barres d'actionnement (704, 84) susceptibles d'être en relation avec au moins une rampe (301, 922) solidaire du support (20, 920),
cette rampe (301, 922) agissant ou permettant d'agir sur au moins l'une des barres d'actionnement (704, 84) pour déplacer la pièce d'obturation en position d'ouverture ou de fermeture du passage de l'eau du réservoir (40, 940) vers le support (20, 920) par l'ouverture (400) lorsque le réservoir (40, 940) est déplacé dans le support (20, 920).

2. Dispositif (10, 910) selon la revendication précédente, **caractérisé en ce que** l'ouverture inférieure (400) de passage d'eau du réservoir (40, 940) vers le support (20, 920) est délimitée par un guide vertical (430, 900) comportant au moins un orifice de passage d'eau (432, 904), la pièce d'obturation (70, 80) étant un piston creux, pouvant coulisser dans le guide (430, 900) sous l'effet de la coopération entre les barres d'actionnement (704, 84) de la pièce d'obturation (70, 80) et les rampes (301) du support (20, 920), et **en ce que** la pièce d'obturation (70, 80) comporte une ouverture de passage d'eau (706, 86) en partie basse.

3. Dispositif (10, 910) selon la revendication précédente, **caractérisé en ce que** l'ouverture de passage d'eau (706, 86) ainsi que les barres d'actionnement (704, 84) sont situées sous la paroi inférieure du réservoir (40, 940), dans une zone inférieure (206) du support (20, 920) fermée par le réservoir (40, 940) et sensiblement à la même pression que la cavité chauffante (60), ladite zone (206) comportant l'ouverture (26, 260) d'écoulement d'eau du support (20, 920) vers la cavité chauffante (60).

4. Dispositif (10, 910) selon l'une des revendications précédentes, **caractérisé en ce que** le réservoir (40, 940) comporte une poignée (52) et est amovible du support (20, 920) par coulissement sensiblement horizontal.

5. Dispositif (10) selon l'une des revendications précédentes, **caractérisé en ce que** le support (20) comprend au moins une rampe (301) agissant ou permettant d'agir sur au moins l'une des barres d'actionnement (704) pour déplacer, lors de l'extraction du réservoir (40) hors du support (20), la pièce d'obturation dans une position d'obturation de l'ouverture (400) permettant le passage de l'eau vers le support (20).

6. Dispositif (10) selon la revendication précédente, **caractérisé en ce que** la pièce d'obturation (70) comporte au moins un trou (708) sur une partie de sa périphérie, sensiblement à mi-hauteur, ledit trou (708) étant susceptible, soit de communiquer avec l'orifice de passage d'eau (432) du guide (430), soit d'être isolé dudit orifice (432), selon la position de la pièce d'obturation (70).

7. Dispositif (10) selon la revendication précédente, **caractérisé en ce que** le guide (430) de la pièce d'obturation (70) est tubulaire, la pièce d'obturation (70) étant cylindrique et comportant au moins trois joints périphériques d'étanchéité (712, 714, 716) prenant appui sur l'intérieur du guide tubulaire (430), deux (714, 716) de ces joints (712, 714, 716) étant disposés de part et d'autre du trou (708) ménagé sur une partie de la périphérie de la pièce d'obturation (70), le troisième (712) étant disposé en partie basse de la pièce d'obturation (70).

8. Dispositif (10) selon l'une des revendications 6 ou 7, **caractérisé en ce que** le réservoir (40) dispose d'un couvercle (42) comportant un guide (420) de la partie supérieure de la pièce d'obturation (70).

9. Dispositif (910) selon l'une des revendications 1 à 4, **caractérisé en ce que** la pièce d'obturation (80) est liée à une tige verticale (90) autour de laquelle est agencé un ressort de rappel (94), ledit ressort (94) étant monté en compression entre l'extrémité de la tige (90) et la pièce d'obturation (80).

10. Dispositif (10, 910) selon l'une des revendications précédentes, **caractérisé en ce que** les rampes (301, 302, 922) du support (20, 920) sont disposées sur au moins l'une des parois de coulissement dudit support, en étant inclinées d'un angle α par rapport à la direction de coulissement du réservoir (40, 940).

11. Dispositif (10, 910) selon la revendication précédente, **caractérisé en ce que** les rampes (301, 302, 922) sont disposées sur l'une des parois latérales du support (20, 920).

12. Dispositif (10, 910) selon la revendication précédente, **caractérisé en ce que** les deux parois latérales du support (20) portent chacune au moins une rampe (301, 302, 922) avec laquelle coopèrent les barres d'actionnement (704, 84) de la pièce d'obturation (70, 80).

13. Dispositif (10, 910) selon l'une des revendications précédentes, **caractérisé en ce que** l'ouverture (44) de remplissage d'eau du réservoir (40, 940) est fermée par un bouchon amovible (46), ledit bouchon (46) réalisant une étanchéité à l'air avec l'intérieur du réservoir (40, 940) lorsque mis en place.

14. Appareil électroménager comportant un dispositif (10, 910) d'alimentation en eau d'une cavité chauffante (60) selon l'une des revendications 1 à 13, **caractérisé en ce que** la cavité chauffante (60) représente la sole d'un four électroménager (1).

15. Appareil électroménager selon la revendication précédente, **caractérisé en ce que** le support (20, 920) est disposé hors de l'enceinte du four (1).

16. Appareil électroménager selon la revendication précédente, **caractérisé en ce que** le support (20, 920) est ouvert au niveau de la face avant du four (1), le réservoir (40, 940) coulissant alors horizontalement, de l'arrière vers l'avant du four (1).

## Claims

1. A device (10, 910) for supplying water to a heating or heated cavity (60) of a household appliance, said device (10, 910) comprising an airtight water tank (40, 940) in the upper part thereof, arranged removably inside a support (20, 920), the tank (40, 940) having an opening (44) in the upper part for filling water as well as an opening (400) in the lower part for the passage of water to the support (20, 920), the latter having, in the lower part, an opening (26, 260) for the water to flow towards the heating cavity (60), the opening (26, 260) through which the water flows from the support (20, 920) to the heating cavity (60) being substantially arranged at the same level as the heating cavity (60), **characterised in that**:
- a plug element (70, 80) is connected with the tank (40, 940) and comprises actuating bars (704, 84) capable of being in relationship with at least one ramp (301, 922) integral with the support (20, 920),
this ramp (301, 922) acting or making it possible to act on at least one of the actuating bars (704, 84) to displace the plug element to a position for opening or closing the passage of water from the tank (40, 940) to the support (20, 920) through the opening (400) when the tank (40, 940) is displaced inside the support (20, 920).

2. A device (10, 910) according to the preceding claim, **characterised in that** the lower opening (400) for the passage of water from the tank (40, 940) to the support (20, 920) is delimited by a vertical guide (430, 900) comprising at least one water passage orifice (432, 904), the plug element (70, 80) being a hollow piston that can slide in the guide (430, 900) due to the cooperation between the actuating bars (704, 84) of the plug element (70, 80) and the ramps (301) of the support (20, 920), and **in that** the plug element (70, 80) has a water passage opening (706, 86) in the lower part.

3. A device (10, 910) according to the preceding claim, **characterised in that** the water passage opening (706, 86) and the actuating bars (704, 84) are located under the lower wall of the tank (40, 940), in a lower zone (206) of the support (20, 920) closed by the tank (40, 940) and substantially with the same pressure as the heating cavity (60), said zone (206) comprising the opening (26, 260) for the water to flow from the support (20, 920) to the heating cavity (60).

4. A device (10, 910) according to one of the preceding claims, **characterised in that** the tank (40, 940) includes a handle (52) and is removable from the support (20, 920) by sliding along a substantially horizontal direction.

5. A device (10) according to one of the preceding claims, **characterised in that** the support (20) comprises at least one ramp (301) acting or making it possible to act on at least one of the actuating bars (704) to displace, when the tank (40) is extracted out of the support (20), the plug element to a position wherein it blocks the opening (400) allowing the passage of water to the support (20).

6. A device (10) according to the preceding claim, **characterised in that** the plug element (70) comprises at least one hole (708) on a part of its peripheral surface, substantially at mid-height, said hole (708) capable of either communicating with the water passage orifice (432) of the guide (430), or being isolated from said orifice (432), depending on the position of the plug element (70).

7. A device (10) according to the preceding claim, **characterised in that** the guide (430) of the plug element (70) is tubular, the plug element (70) being cylindrical and having at least three peripheral seals (712, 714, 716) resting on the inside of the tubular guide (430), two (714, 716) of these seals (712, 714, 716) being arranged on either side of the hole (708) provided on a part of the peripheral surface of the plug element (70), the third (712) being arranged in the lower part of the plug element (70).

8. A device (10) according to one of claims 6 or 7, **characterised in that** the tank (40) has a lid (42) with a guide (420) of the upper part of the plug element (70).

9. A device (910) according to one of claims 1 to 4, **characterised in that** the plug element (80) is connected to a vertical rod (90) around which is arranged a return spring (94), said spring (94) being mounted in compression between the end of the rod (90) and the plug element (80).

10. A device (10, 910) according to one of the preceding claims, **characterised in that** the ramps (301, 302, 922) of the support (20, 920) are arranged on at least one of the sliding walls of said support, being inclined at an angle a with respect to the direction of sliding of the tank (40, 940).

11. A device (10, 910) according to the preceding claim, **characterised in that** the ramps (301, 302, 922) are arranged on one of the lateral walls of the support (20, 920).

12. A device (10, 910) according to the preceding claim, **characterised in that** the two lateral walls of the support (20) each bear at least one ramp (301, 302, 922) with which the actuating bars (704, 84) of the plug element (70, 80) cooperate.

13. A device (10, 910) according to one of the preceding claims, **characterised in that** the water filling opening (44) of the tank (40, 940) is closed by a removable cap (46), said cap (46) providing an airtight sealing with the inside of the tank (40, 940) when in place.

14. A household appliance comprising a device (10, 910) for supplying water to a heating cavity (60) according to one of claims 1 to 13, **characterised in that** the heating cavity (60) represents the floor of a household oven (1).

15. A household appliance according to the preceding claim, **characterised in that** the support (20, 920) is arranged outside the chamber of the oven (1).

16. A household appliance according to the preceding claim, **characterised in that** the support (20, 920) is open on the front side of the oven (1), the tank (40, 940) then sliding horizontally from the rear to the front of the oven (1).

## Patentansprüche

1. Vorrichtung (10, 910) für die Wasserversorgung einer erhitzenden oder erhitzten Höhlung (60) eines Elektrohaushaltsgerätes, wobei die Vorrichtung (10, 910) einen Wasserbehälter (40, 940) umfasst, der in seinem oberen Teil luftdicht ist und herausnehmbar in einer Halterung (20, 920) angeordnet ist, wobei der Behälter (40, 940) im oberen Teil eine Öffnung (44) für die Wasserbefüllung und im unteren Teil eine Öffnung (400) für den Wasserdurchlauf in Richtung Halterung (20, 920) aufweist, wobei Letztere im unteren Teil eine Öffnung (26, 260) für den Wasserauslauf in Richtung erhitzende Höhlung (60) aufweist, wobei die Öffnung (26, 260) für den Wasserauslauf von der Halterung (20, 920) in Richtung erhitzende Höhlung (60) im Wesentlichen auf gleicher Höhe wie die erhitzende Höhlung (60) angeordnet ist, **dadurch gekennzeichnet, dass**:
- ein Verschlussteil (70, 80) mit dem Behälter (40, 940) verbunden ist und Betätigungszapfen (704, 84) umfasst, die imstande sind, mit mindestens einer Rampe (301, 922), die mit der Halterung (20, 920) im unteren Teil fest verbunden ist, in Verbindung zu stehen,
wobei diese Rampe (301, 922) auf mindestens einen der Betätigungszapfen (704, 84) einwirkt oder es ermöglicht, darauf einzuwirken, um das Verschlussteil in eine Position für die Öffnung oder Schließung des Wasserdurchlaufs vom Behälter (40, 940) in Richtung Halterung (20, 920) durch die Öffnung (400) zu verschieben, wenn der Behälter (40, 940) in der Halterung (20, 920) verschoben wird.

2. Vorrichtung (10, 910) nach dem vorhergehenden Anspruch, **dadurch gekennzeichnet, dass** die untere Öffnung (400) für den Wasserdurchlauf vom Behälter (40, 940) in Richtung Halterung (20, 920) von einer vertikalen Führung (430, 900) begrenzt wird, die mindestens eine Wasserdurchlauföffnung (432, 904) umfasst, wobei das Verschlussteil (70, 80) ein hohler Kolben ist, der in der Führung (430, 900) unter dem Effekt der Zusammenwirkung zwischen den Betätigungszapfen (704, 84) des Verschlussteils (70, 80) und den Rampen (301) der Halterung (20, 920) gleiten kann, und dadurch, dass das Verschlussteil (70, 80) im unteren Teil eine Wasserdurchlauföffnung (706, 86) umfasst.

3. Vorrichtung (10, 910) nach dem vorhergehenden Anspruch, **dadurch gekennzeichnet, dass** sich die Wasserdurchlauföffnung (706, 86) und die Betätigungszapfen (704, 84) unterhalb der unteren Wand des Behälters (40, 940) in einem unteren Bereich (206) der Halterung (20, 920) befinden, der vom Behälter (40, 940) geschlossen wird und im Wesentlichen den gleichen Druck wie die erhitzende Höhlung (60) aufweist, wobei der Bereich (206) die Öffnung (26, 260) für den Wasserauslauf von der Halterung (20, 920) in Richtung erhitzende Höhlung (60) umfasst.

4. Vorrichtung (10, 910) nach einem der vorhergehenden Ansprüche, **dadurch gekennzeichnet, dass** der Behälter (40, 940) einen Griff umfasst (52) und aus der Halterung (20, 920) durch im Wesentlichen horizontales Gleiten herausgenommen werden kann.

5. Vorrichtung (10) nach einem der vorhergehenden Ansprüche, **dadurch gekennzeichnet, dass** die Halterung (20) mindestens eine Rampe (301) umfasst, die auf mindestens einen der Betätigungszapfen (704) einwirkt oder es ermöglicht, darauf einzuwirken, um beim Herausziehen des Behälters (40) aus der Halterung (20) das Verschlussteil in eine Position für die Schließung der Öffnung (400), die den Wasserdurchlauf in Richtung Halterung (20) ermöglicht, zu verschieben.

6. Vorrichtung (10) nach dem vorhergehenden Anspruch, **dadurch gekennzeichnet, dass** das Verschlussteil (70) mindestens ein Loch (708) auf einem Abschnitt seines Umfangs, im Wesentlichen in der Mitte, umfasst, wobei das Loch (708) imstande ist, entweder mit der Wasserdurchlauföffnung (432) der Führung (430) verbunden oder von dieser Öffnung (432) getrennt zu sein, je nach Position des Verschlussteils (70).

7. Vorrichtung (10) nach dem vorhergehenden Anspruch, **dadurch gekennzeichnet, dass** die Führung (430) des Verschlussteils (70) röhrenförmig ist, wobei das Verschlussteil (70) zylindrisch ist und mindestens drei umlaufende Dichtungen (712, 714, 716) umfasst, die gegen die Innenseite der röhrenförmigen Führung (430) drücken, wobei zwei (714, 716) dieser Dichtungen (712, 714, 716) auf jeder Seite des Lochs (708) angeordnet sind, das auf einem Abschnitt des Umfangs des Verschlussteils (70) ausgeführt ist, wobei die Dritte (712) im unteren Teil des Verschlussteils (70) angeordnet ist.

8. Vorrichtung (10) nach einem der Ansprüche 6 oder 7, **dadurch gekennzeichnet, dass** der Behälter (40) über einen Deckel (42) verfügt, der eine Führung (420) für den oberen Teil des Verschlussteils (70) umfasst.

9. Vorrichtung (910) nach einem der Ansprüche 1 bis 4, **dadurch gekennzeichnet, dass** das Verschlussteil (80) mit einem vertikalen Stift (90) verbunden ist, um den herum eine Rückholfeder (94) angeordnet ist, wobei die Feder (94) zwischen dem Ende des Stifts (90) und dem Verschlussteil (80) komprimiert befestigt ist.

10. Vorrichtung (10, 910) nach einem der vorhergehenden Ansprüche, **dadurch gekennzeichnet, dass** die Rampen (301, 302, 922) der Halterung (20, 920) auf mindestens einer der Gleitwände der Halterung angeordnet sind, wobei sie in Bezug auf die Gleitrichtung des Behälters (40, 940) in einem Winkel α geneigt sind.

11. Vorrichtung (10, 910) nach dem vorhergehenden Anspruch, **dadurch gekennzeichnet, dass** die Rampen (301, 302, 922) auf einer der Seitenwände der Halterung (20, 920) angeordnet sind.

12. Vorrichtung (10, 910) nach dem vorhergehenden Anspruch, **dadurch gekennzeichnet, dass** die zwei Seitenwände der Halterung (20) jeweils mindestens eine Rampe (301, 302, 922) tragen, mit der die Betätigungszapfen (704, 84) des Verschlussteils (70, 80) zusammenwirken.

13. Vorrichtung (10, 910) nach einem der vorhergehenden Ansprüche, **dadurch gekennzeichnet, dass** die Öffnung (44) für die Wasserbefüllung des Behälters (40, 940) von einem abnehmbaren Verschluss (46) geschlossen wird, wobei der Verschluss (46) den Innenraum des Behälters (40, 940), wenn dieser eingesetzt ist, luftdicht abschließt.

14. Elektrohaushaltsgerät, umfassend eine Vorrichtung (10, 910) für die Wasserversorgung einer erhitzenden Höhlung (60) nach einem der Ansprüche 1 bis 13, **dadurch gekennzeichnet, dass** die erhitzende Höhlung (60) den Boden eines Haushaltsbackofens (1) bildet.

15. Elektrohaushaltsgerät nach dem vorhergehenden Anspruch, **dadurch gekennzeichnet, dass** die Halterung (20, 920) außerhalb der Umwandung des Backofens (1) angeordnet ist.

16. Elektrohaushaltsgerät nach dem vorhergehenden Anspruch, **dadurch gekennzeichnet, dass** die Halterung (20, 920) auf Höhe der Vorderseite des Backofens (1) offen ist, wobei der Behälter (40, 940) schließlich horizontal vom rückseitigen in den vorderen Bereich des Backofens (1) gleitet.
